# EUROPEAN PATENT SPECIFICATION

(11) **EP 3 842 699 B1**
(45) Date of publication and mention of the grant of the patent: **03.01.2024**
(21) Application number: 20210304.0
(22) Date of filing: 27.11.2020
(51) Int. Cl.: F24F 8/15, F24F 8/60, F24F 110/70, F24F 110/76

(54) **AN AIR PURIFIER WHEREIN THE HYDROGEN RELEASE IS CONTROLLED**
EIN LUFTREINIGER, IN DEM DIE WASSERSTOFFFREISETZUNG GESTEUERT WIRD
UN PURIFICATEUR D'AIR OÙ LE REJET D'HYDROGÈNE EST CONTRÔLÉ

(30) Priority: 24.12.2019 TR 201921301
(43) Date of publication of application: 30.06.2021
(73) Proprietor: Arçelik Anonim Sirketi, 34445 Istanbul (TR)
(72) Inventor: YAVUZ, Pinar, 34445 ISTANBUL (TR); YESILCUBUK, Alper, 34445 ISTANBUL (TR); SARICIFTCI, Niyazi Serdar, 34445 ISTANBUL (TR); YILMAZ, Tugce, 34445 ISTANBUL (TR); ER, Dilan, 34445 ISTANBUL (TR)

(56) References cited:
- WO-A1-2007/128584
- WO-A2-2006/036396
- CN-B- 103 453 587
- JP-A- 2003 144 828
- US-A1- 2014 248 206
- US-A1- 2015 290 576
- US-A1- 2018 224 145

## Description

The present invention relates to an air purifier which purifies the air in an indoor environment in a building in a controlled manner.

Today, the need for ventilation and the need for fresh air becomes more important in environments such as homes and offices especially in high-rise buildings. Plants can be a temporary solution for daytime but when the sunlight disappears; plants also start to produce carbon dioxide like human beings and the air quality of the environment decreases. Especially in high-rise buildings, it is not always possible to continuously keep the windows open and ventilate the environment. The continuously rising carbon dioxide density in the air adversely affects human health. The amount of oxygen in the environment directly affects the metabolic rate of people and the lack thereof creates weakness and fatigue in humans. Ensuring that the amount of oxygen in the interior environment does not fall below a certain level while reducing the amount of carbon dioxide generated in the environment makes the human metabolism much more vivid and vigorous.

Today, devices wherein the air is purified by means of processes such as electrodialysis and the oxygen density in the environment is increased by means of humidity. However, in such devices, as the oxygen density in the air increases during the processes performed to increase the oxygen density, hydrogen gas which is harmful for humans is also released. The hydrogen gas can cause deflagration when the density in the air by volume reaches 4% and explosions as the density reaches 7%. JP 2003 144828 discloses an acid and base treatment of water where the condensed water is treated with a water purification device equipped with a strongly acidic cation exchange resin and a weakly basic anion exchange resin to remove contaminants dissolved in the condensed water. The working principle of the air purification of JP 2003 144828 and the present invention is therefore different from each other.

The aim of the present invention is the realization of an air purifier wherein the hydrogen gas released during the air purification process is prevented from increasing in the indoor environment and the air is cleaned.

The air purifier of the present invention comprises an air inlet opening through which the air is sucked in, a CO₂ absorbing unit wherein the carbon dioxide is absorbed from the air having high carbon dioxide density, and an air outlet opening through which the air which is cleansed of CO₂ is sent back to the environment wherein the air purification is performed.

The air purifier of the present invention comprises an acid dosing unit and a base dosing unit.

The air purifier of the present invention comprises a control unit which controls the operation of the device, and which controls the delivery of acid and base from the acid dosing unit and the base dosing unit to the CO₂ absorbing unit in the correct time and order.

The air purifier of the present invention further comprises a condenser which is positioned outside the body and a water electrolysis unit. The water electrolysis unit comprises an anode receptacle and a cathode receptacle.

The model embodiments that relate to the air purifier realized in order to attain the aim of the present invention are illustrated in the attached figure, where:

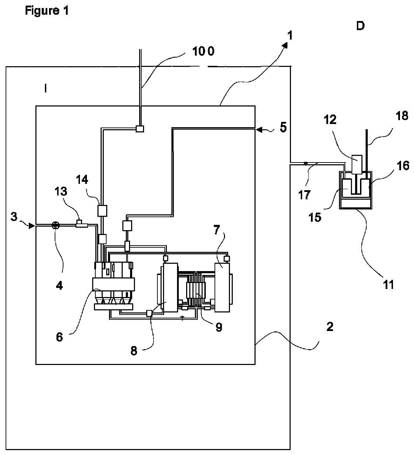

Figure 1 - is the schematic view of the air purifier wherein the hydrogen release is controlled in an embodiment of the present invention.

The elements illustrated in the figures are numbered as follows:
- 1.: Air purifier
- 2.: Body
- 3.: Air inlet opening
- 4.: Fan
- 5.: Air outlet opening
- 6.: CO₂ absorbing unit
- 7.: Acid dosing unit
- 8.: Base dosing unit
- 9.: Electrodialysis unit
- 10.: CO₂ tube
- 11.: Water electrolyzer
- 12.: Condenser
- 13.: O₂/CO₂ sensor
- 14.: Control unit
- 15.: Anode receptacle
- 16.: Cathode receptacle
- 17.: O₂ outlet line
- 18.: H₂ outlet line

### I. Environment wherein the air is to be purified

### D. Outside the environment wherein the air is to be purified

The air purifier (1) suitable for purification of air in an indoor environment of a building wherein the air is to be purified (I), comprises
- a body (2);
- an air inlet opening (3) provided on the body (2);
- a fan (4) which enables the air to be directed through the air inlet opening (3) into the body (2);
- an air outlet opening (5) which enables the air purified in the body (2) to be released out of the body (2);
- a CO₂ absorbing unit (6) into which the air is sucked;
- a base dosing unit (8) which supplies a base solution into the CO₂ absorbing unit (6);
- an acid dosing unit (7) which supplies an acid solution into the CO₂ absorbing unit (6);
- a control unit (14) which supplies the base solution and the acid solution to the CO₂ absorbing unit (6) in this order;
- a CO₂ tube (10) enabling the CO₂ absorbed in the CO₂ absorbing unit (6) to be discharged to outside the environment wherein the air is to be purified (D);
- an electrodialysis unit (9) wherein the salt created in the CO₂ absorbing unit (6) is resolved back to acid and base.

The air purifier (1) of the present invention comprises
- a condenser (12) and
- a water electrolysis unit (11) wherein the water received from the condenser (12) is electrolyzed, comprising an anode receptacle (15) and a cathode receptacle (16),
which are suitable to be positioned outside the environment wherein the air is to be purified (D) and which can be mounted as an additional module.

In the air purifier (1) of the present invention, the humidity outside the environment wherein the air is to be purified (D), for example outside the room, by means of the condenser (12) and the water electrolysis unit (11) is converted to water by the condenser (12) and then supplied to the water electrolysis unit (11). The water molecules supplied to the water electrolysis unit (11) are resolved into oxygen in the anode receptacle (15) and hydrogen in the cathode receptacle (16). Thus, in addition to the clean air obtained by absorbing and resolving the carbon dioxide in a closed environment such as a room, the oxygen obtained from humidity is supplied to the environment wherein the air is to be purified (I), and the air quality is further improved. The hydrogen gas released in addition to oxygen in the water electrolysis unit (11) is discharged outside the environment wherein the air is to be purified (D).

In an embodiment of the present invention, the air purifier (1) comprises a water electrolysis unit (11) only the cathode receptacle (16) of which is positioned outside the environment wherein the air is to be purified (D), separated from the body (2). Thus, the hydrogen generated in the cathode receptacle (16) is enabled to be released to open air.

In an embodiment of the present invention, the air purifier (1) comprises a water electrolysis unit (11) both the anode receptacle (15) and the cathode receptacle (16) of which are positioned outside the environment wherein the air is to be purified (D), separated from the body (2). By means of this embodiment, the need for disassembling the water electrolysis unit (11) and mounting outside the body (2) is eliminated.

In an embodiment of the present invention, the air purifier (1) comprises an O₂ outlet line (17) which is provided on the anode receptacle (15) and which supplies oxygen to the environment wherein the air is to be purified (I) and an H₂ outlet line (18) which is provided on the cathode receptacle (16) and which releases hydrogen to outside the environment wherein the air is to be purified (D). The O₂ outlet line (17) and H₂ outlet line (18) are disposed on the anode and cathode receptacles (15, 16) in the embodiment wherein only the cathode receptacle (16) is positioned outside the environment wherein the air is to be purified (D) and both the anode receptacle (15) and the cathode receptacle (16) are positioned outside the environment wherein the air is to be purified (D). Thus, the flows of oxygen and hydrogen are controlled.

In an embodiment of the present invention, the air purifier (1) comprises a O₂/CO₂ sensor (13) which is provided on the air inlet opening (3) and a control unit (14) which is in communication with the O₂/CO₂ sensor (13) and which first activates the condenser (12) and the water electrolysis unit (11) before activating the CO₂ absorbing unit (6) when the oxygen level in the environment wherein the air is to be purified (I) falls below a level predetermined by the producer. Thus, when the carbon dioxide ratio in the environment is not very high, oxygen-rick air can be supplied to the environment without activating the CO₂ absorbing unit (6).

The air purified (1) of the present invention can be integrated with an air conditioner. The air conditioner comprises the air purifier (1) of the present invention.

By means of the present invention, an air purifier (1) is realized, wherein the hydrogen gas released during the air purification process is discharged outside the environment wherein the air is to be purified (D) in a controlled manner.

## Claims

1. An air purifier (1) suitable for purification of air in an indoor environment of a building wherein the air is to be purified (I), **comprising**
• a body (2);
• an air inlet opening (3) provided on the body (2);
• a fan (4) which enables the air to be directed through the air inlet opening (3) into the body (2);
• an air outlet opening (5) which enables the air purified in the body (2) to be released out of the body (2);
• a CO₂ absorbing unit (6) into which the air is sucked;
• a base dosing unit (8) which supplies a base solution into the CO₂ absorbing unit (6);
• an acid dosing unit (7) which supplies an acid solution into the CO₂ absorbing unit (6);
• a control unit (14) which supplies the base solution and the acid solution to the CO₂ absorbing unit (6) in this order;
• a CO₂ tube (10) enabling the CO₂ absorbed in the CO₂ absorbing unit (6) to be discharged to outside the environment wherein the air is to be purified (D);
• an electrodialysis unit (9) wherein the salt created in the CO₂ absorbing unit (6) is resolved back to acid and base,
**characterized by**
• a condenser (12) and
• a water electrolysis unit (11) wherein the water received from the condenser (12) is electrolyzed, comprising an anode receptacle (15) and a cathode receptacle (16),
which are suitable to be positioned outside the environment wherein the air is to be purified (D) and which can be mounted as an additional module.

2. An air purifier (1) as in Claim 1, **characterized by** a water electrolysis unit (11) only the cathode receptacle (16) of which is suitable to be positioned outside the environment wherein the air is to be purified (D).

3. An air purifier (1) as in Claim 1, **characterized by** a water electrolysis unit (11) both the anode receptacle (15) and the cathode receptacle (16) of which are suitable to be positioned outside the environment wherein the air is to be purified (D).

4. An air purifier (1) as in any one of the above claims, **characterized by** an O₂ outlet line (17) which is provided on the anode receptacle (15) and which supplies oxygen to the environment wherein the air is to be purified (I) and an H₂ outlet line (18) which is provided on the cathode receptacle (16) and which releases hydrogen to outside the environment wherein the air is to be purified (D).

5. An air purifier (1) as in any one of the above claims, **characterized by** a O₂/CO₂ sensor (13) which is provided on the air inlet opening (3) and a control unit (14) which is in communication with the O₂/CO₂ sensor (13) and which first activates the condenser (12) and the water electrolysis unit (11) before activating the CO₂ absorbing unit (6) when the oxygen level in the environment wherein the air is to be purified (I) falls below a level predetermined by the producer.

6. An air conditioner comprising an air purifier (1) as in any one of the above claims.

## Patentansprüche

1. Ein Luftreiniger (1), der für die Reinigung von Luft in einem Innenraum eines Gebäudes geeignet ist, in dem die Luft gereinigt werden soll (I), **umfasst**
• einen Körper (2);
• eine Lufteinlassöffnung (3), die am Körper (2) vorgesehen ist;
• ein Ventilator (4), der es ermöglicht, die Luft durch die Lufteinlassöffnung (3) in den Körper (2) zu leiten;
• eine Luftauslassöffnung (5), die es ermöglicht, die im Körper (2) gereinigte Luft aus dem Körper (2) herauszulassen;
• eine CO2-Absorptionseinheit (6), in die die Luft eingesaugt wird;
• eine Basendosiereinheit (8), die eine Basenlösung in die CO2-Absorptionseinheit (6) einspeist;
• eine Säuredosiereinheit (7), die eine Säurelösung in die CO2-Absorptionseinheit (6) einspeist;
• eine Steuereinheit (14), die der CO2-Absorptionseinheit (6) die Basenlösung und die Säurelösung in dieser Reihenfolge zuführt;
• eine CO2-Röhre (10), die es ermöglicht, das in der CO2-Absorptionseinheit (6) absorbierte CO2 nach außerhalb der Umgebung, in der die Luft gereinigt werden soll (D), abzuleiten;
• eine Elektrodialyseeinheit (9), in der das in der CO2-Absorptionseinheit (6) gebildete Salz wieder in Säure und Base aufgelöst wird,
**gekennzeichnet ist er durch**
• einen Kondensator (12) und
• einer Wasserelektrolyseeinheit (11), in der das von dem Kondensator (12) erhaltene Wasser elektrolysiert wird, mit einem Anodenbehälter (15) und einem Kathodenbehälter (16),
die außerhalb der Umgebung, in der die Luft gereinigt werden soll, aufgestellt werden können (D) und die als zusätzliches Modul montiert werden können.

2. Ein Luftreiniger (1), wie in Anspruch 1 aufgeführt, **ist dadurch gekennzeichnet, dass** eine Wasserelektrolyseeinheit (11), von der nur der Kathodenbehälter (16) geeignet ist, außerhalb der Umgebung, in der die Luft gereinigt werden soll (D), aufgestellt zu werden.

3. Ein Luftreiniger (1), wie in Anspruch 1 aufgeführt, **ist dadurch gekennzeichnet, dass** eine Wasserelektrolyseeinheit (11), deren Anodenbehälter (15) und Kathodenbehälter (16) geeignet sind, außerhalb der Umgebung positioniert zu werden, in der die Luft gereinigt werden soll (D).

4. Ein Luftreiniger (1), wie in einem der vorherigen Ansprüchen aufgeführt, **ist dadurch gekennzeichnet, dass** eine 02-Auslassleitung (17), die an der Anodenbehälter (15) vorgesehen ist und der Umgebung, in der die Luft gereinigt werden soll, Sauerstoff zuführt (I), und eine H2-Auslassleitung (18), die an der Kathodenbehälter (16) vorgesehen ist und das Wasserstoff an die Außenseite der Umgebung abgibt, in der die Luft gereinigt werden soll (D).

5. Ein Luftreiniger (1), wie in einem der vorherigen Ansprüchen aufgeführt, **ist dadurch gekennzeichnet, dass** ein O2/CO2-Sensor (13), der an der Lufteinlassöffnung (3) vorgesehen ist, und eine Steuereinheit (14), die mit dem O2/CO2-Sensor (13) in Verbindung steht und die zuerst den Kondensator (12) und die Wasserelektrolyseeinheit (11) aktiviert, bevor sie die CO2-Absorptionseinheit (6) aktiviert, wenn der Sauerstoffgehalt in der Umgebung, in der die Luft gereinigt werden soll (I), unter einen vom Hersteller vorgegebenen Wert fällt.

6. Ein Klimagerät umfasst einen Luftreiniger (1) nach einem der vorstehenden Ansprüche.

## Revendications

1. Un purificateur d'air (1) adapté à la purification de l'air dans un environnement intérieur d'un bâtiment dans lequel l'air doit être purifié (I), **comprenant**
• un corps (2),
• une ouverture d'entrée d'air (3) prévue sur le corps (2) ;
• un ventilateur (4) qui permet de diriger l'air à travers l'ouverture d'entrée d'air (3) dans le corps (2) ;
• une ouverture de sortie d'air (5) qui permet à l'air purifié dans le corps (2) d'être libéré hors du corps (2) ;
• une unité d'absorption du CO₂ (6) dans laquelle l'air est aspiré ;
• une unité de dosage de base (8) qui fournit une solution de base à l'unité d'absorption du CO₂ (6) ;
• une unité de dosage d'acide (7) qui fournit une solution acide à l'unité d'absorption du CO₂ (6) ;
• une unité de commande (14) qui fournit la solution de base et la solution acide à l'unité d'absorption du CO₂ (6) dans cet ordre ;
• un tube de CO₂ (10) permettant d'évacuer le CO₂ absorbé dans l'unité d'absorption du CO₂ (6) vers l'extérieur de l'environnement dans lequel l'air doit être purifié (D) ;
• une unité d'électrodialyse (9) dans laquelle le sel créé dans l'unité d'absorption du CO₂ (6) est ramené à l'état d'acide et de base,
**caractérisé par**
• un condenseur (12) et
• une unité d'électrolyse de l'eau (11) dans laquelle l'eau reçue du condenseur (12) est électrolysée, comprenant un réceptacle d'anode (15) et un réceptacle de cathode (16),
qui peuvent être placés à l'extérieur de l'environnement dans lequel l'air doit être purifié (D) et qui peuvent être montés en tant que module supplémentaire.

2. Un purificateur d'air (1) selon la déclaration 1, **caractérisé par** une unité d'électrolyse de l'eau (11) dont seul le réceptacle de la cathode (16) est apte à être positionné à l'extérieur de l'environnement dans lequel l'air doit être purifié (D).

3. Un purificateur d'air (1) selon la déclaration 1, **caractérisé par** une unité d'électrolyse de l'eau (11) dont le réceptacle de l'anode (15) et le réceptacle de la cathode (16) peuvent être placés à l'extérieur de l'environnement dans lequel l'air doit être purifié (D).

4. Un purificateur d'air (1) tel que décrit dans l'une quelconque des déclarations précédentes, **caractérisé par** une ligne de sortie O₂ (17) qui est prévue sur le réceptacle anodique (15) et qui fournit de l'oxygène à l'environnement dans lequel l'air doit être purifié (I) et une ligne de sortie H₂ (18) qui est prévue sur le réceptacle cathodique (16) et qui libère de l'hydrogène à l'extérieur de l'environnement dans lequel l'air doit être purifié (D).

5. Un purificateur d'air (1) selon l'une quelconque des déclarations précédentes, **caractérisé par** un capteur O₂/CO₂ (13) qui est prévu sur l'ouverture d'entrée d'air (3) et une unité de commande (14) qui est en communication avec le capteur O₂/CO₂ (13) et qui active d'abord le condenseur (12) et l'unité d'électrolyse de l'eau (11) avant d'activer l'unité d'absorption de CO₂ (6) lorsque le niveau d'oxygène dans l'environnement dans lequel l'air doit être purifié (I) tombe en dessous d'un niveau prédéterminé par le producteur.

6. Un climatiseur comprenant un purificateur d'air (1) tel que dans l'une quelconque des déclarations précédentes.
